# EUROPEAN PATENT SPECIFICATION

(11) **EP 4 244 952 B1**
(45) Date of publication and mention of the grant of the patent: **25.11.2026**
(21) Application number: 20838535.1
(22) Date of filing: 21.12.2020
(51) Int. Cl.: H02J 50/80, H04B 5/79

(54) **COMMUNICATION PROTOCOL TO IMPLEMENT SERVICES IN A WIRELESS POWER TRANSFER NETWORK**
KOMMUNIKATIONSPROTOKOLL ZUR IMPLEMENTIERUNG VON DIENSTEN IN EINEM DRAHTLOSEN STROMÜBERTRAGUNGSNETZWERK
PROTOCOLE DE COMMUNICATION POUR IMPLÉMENTER DES SERVICES DANS UN RÉSEAU DE TRANSFERT D'ÉNERGIE SANS FIL

(43) Date of publication of application: 20.09.2023
(73) Proprietor: Huawei Technologies Co., Ltd., Shenzhen, Guangdong 518129 (CN)
(72) Inventor: FAROOQ, Muhammad, Umer, 16440 Kista (SE)
(74) Representative: Isarpatent
(86) International application number: PCT/EP2020/087508
(87) International publication number: WO 2022/135672

(56) References cited:
- US-B2- 9 923 603

## Description

### TECHNICAL FIELD

This disclosure relates generally to wireless power transfer or transmission networks and, more particularly, the invention relates to an application layer communication protocol to implement wireless power transfer services in a wireless power transfer network and proposes a transmitter apparatus, a receiver apparatus, a wireless power transfer network comprising a transmitter apparatus and at least one receiver apparatus, a method thereof and a non-transitory computer readable medium.

### BACKGROUND

Wireless power transfer (WPT), wireless power transmission, wireless energy transmission (WET), or electromagnetic power transfer is the transmission of electrical energy without wires as a physical link. In a wireless power transfer system or network (WPTN), a transmitter device, driven by electric power from a power source, generates a time-varying electromagnetic field, which transmits power across space to a receiver device. The receiver device extracts power from the field and supplies it to an electrical load.

For effective communication between a controller application and different wireless power transfer devices or smart devices in a wireless power transfer network, there is a need to define a communication frame structure at the application level. The wireless power transfer device will also need to report back to the wireless power controller after it has executed the wireless power transfer command. Hence, there is also a need for a message exchange sequence that can result in successful implementation of a particular wireless power transfer service.

Current protocols used to establish communication among devices in short range communication networks include protocols such as Bluetooth^{™}, Zigbee^{™}, Thread^{™} and Z-Wave^{™}. These protocols target specific use cases and the application layer protocol messages/commands and message exchange sequence are structured for the specific use cases. These protocols do not provide a standard message exchange sequence and application level message structure/format that is generic enough to implement different control, management, and value added services in a wireless power transfer network.

Thus, there is a need for improved apparatus and methods that can efficiently enable application layer communication for wireless power transfer services in a wireless power transfer network. Accordingly, it would be desirable to provide methods and apparatuses that address at least some of the problems described above.
US 9 923 603 B2 relates to a method for transferring wireless power. It discloses management protocols for wireless power transfer to multiple devices in a multiple device wireless power management system.

### SUMMARY

The object of the present invention is directed to an application layer communication protocol or structure configured to enable the implementation of wireless power transfer services in a wireless power transfer network. The disclosed embodiments enable wireless power transfer devices in a wireless power transfer network to communicate with each other in a standardized manner. This and other objectives are solved by the subject matter of the independent claims. Further advantageous embodiments can be found in the dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, the above and further objectives and advantages are obtained by an apparatus in a wireless power transfer network. In one embodiment, the apparatus includes a processor configured to form a first message in an application layer of an application of the apparatus. The first message includes a plurality of attributes. A first attribute of the first message identifies a wireless power transfer service of the wireless power transfer network. A second attribute identifies the application of the apparatus generating the first message. A third attribute identifies a destination application configured to receive the first message. The apparatus is configured to send the first message to the destination application identified by the third attribute of the first message. The aspects of the disclosed embodiments provide an application level message frame structure or communication protocol, and a standard message exchange sequence that is generic enough to implement different control, management, and value added services in a wireless power transfer network. New services can be derived from the generic frame structure and the combination of message exchange sequences.

In a possible implementation form of the apparatus, the processor is further configured to receive a second message in the application layer of the apparatus. The second message includes a plurality of attributes. A first attribute of the second message defines a response to the first message. A second attribute identifies an application generating the second message. A third attribute identifies the application of the apparatus configured to receive the second message. The generic application layer frame structure enables the implementation of existing and new wireless power transfer services in a wireless power transfer network. New services can be derived from the generic frame structure and the combination of message exchange sequences.

In the invention, one or more of the first message and the second message includes at least one further attribute related to the wireless power transfer service. The generic application layer frame structure enables the implementation of existing and new wireless power transfer services in a wireless power transfer network. New services can be derived from the generic frame structure and the combination of message exchange sequences.

In the invention, the first message includes a variable number of attribute fields. The number of attribute fields is dependent upon the particular wireless power transfer service being implemented. The generic application layer frame structure enables the implementation of existing and new wireless power transfer services in a wireless power transfer network.

In a possible implementation form of the apparatus, one or more of the first message and the second message include attributes for one or more of a sequence number, a number of parameters, a list of parameters, an error code and a reason attribute. The generic application layer frame structure enables the implementation of existing and new wireless power transfer services in a wireless power transfer network.

In a possible implementation form of the apparatus, the apparatus is configured to initiate a wireless power transfer service in the wireless power transfer network, the wireless power transfer service including one or more of wireless power service scheduling, remote hardware control, determining interoperability among wireless power transfer devices in the wireless power transmission network, mobility detection features of transmitters and receivers in the wireless power transfer network, error and fault reporting and initiating and terminating a wireless power transfer service or session. The aspects of the disclosed embodiments provide an application level message structure or format and standard message exchange sequence that is generic enough to implement different control, management, and value added services in a wireless power transfer network.

In a possible implementation form of the apparatus, the apparatus is configured to add one or more attributes to the first message to implement any particular wireless power transfer service in the wireless power transfer network. The aspects of the disclosed embodiments provide an application level message structure or format and standard message exchange sequence that is generic enough to implement different control, management, and value added services in a wireless power transfer network.

In a possible implementation form of the apparatus, the apparatus is wireless power transfer device, such as a wireless power transfer transmitter and/or a wireless power transfer receiver. The aspects of the disclosed embodiments provide a complete application layer communication protocol solution focused on the needs of the wireless power transfer network.

According to a second aspect according to the invention, the above and further objectives and advantages are obtained by an apparatus in a wireless power transfer network. In one embodiment, the apparatus includes a processor configured to receive a first message in an application layer of an application of the apparatus, the first message including a plurality of attributes. A first attribute of the first message identifies a wireless power transfer service of the wireless power transfer network. A second attribute identifies an application generating the first message. A third attribute identifies the application of the apparatus configured to receive the first message. The apparatus is configured to form a second message in the application layer responsive to the first message and send the second message. The aspects of the disclosed embodiments provide an application level message frame structure or communication protocol, and a standard message exchange sequence that is generic enough to implement different control, management, and value added services in a wireless power transfer network. New services can be derived from the generic frame structure and the combination of message exchange sequences.

In a possible implementation form of the apparatus, the apparatus is configured to send the second message to the application identified in the second attribute of the first message. The aspects of the disclosed embodiments provide an application level message frame structure or communication protocol, and a standard message exchange sequence that is generic enough to implement different control, management, and value added services in a wireless power transfer network. New services can be derived from the generic frame structure and the combination of message exchange sequences.

In a possible implementation form of the apparatus, the apparatus is configured to form the second message by including a plurality of attributes in the second message. A first attribute of the second message defines a response to the first message. A second attribute identifies the application generating the second message. A third attribute identifies an application of the wireless power transfer network configured to receive the second message. The aspects of the disclosed embodiments provide an application level message frame structure or communication protocol, and a standard message exchange sequence that is generic enough to implement different control, management, and value added services in a wireless power transfer network. New services can be derived from the generic frame structure and the combination of message exchange sequences.

In a possible implementation form of the apparatus, the second message includes a variable number of attribute fields, the number of attribute fields being dependent upon the particular wireless power transfer service being implemented. The aspects of the disclosed embodiments provide an application level message structure or format and standard message exchange sequence that is generic enough to implement different control, management, and value added services in a wireless power transfer network.

In a possible implementation form of the apparatus, the apparatus is a wireless power transfer device, such as a wireless power transfer transmitter and/or a wireless power transfer receiver. The aspects of the disclosed embodiments provide a complete application layer communication protocol solution focused on the needs of the wireless power transfer network.

According to a third aspect according to the invention, the above and further objectives and advantages are obtained by a wireless power transfer network. The wireless power transfer network includes a first wireless power transfer apparatus and at least one second wireless power transfer apparatus. The first wireless power transfer apparatus is configured to form a first message in an application layer of an application of the first wireless power transfer apparatus. The first message includes a plurality of attributes. A first attribute of the first message identifies a wireless power transfer service of the wireless power transfer network, a second attribute identifies the application of the first wireless power transfer apparatus generating the first message, and a third attribute identifies a destination application of the at least one second wireless power transfer network configured to receive the first message. The first wireless power transfer apparatus is configured to send the first message to the destination application identified by the third attribute. The generic application layer frame structure enables the implementation of existing and new wireless power transfer services in a wireless power transfer network. New services can be derived from the generic frame structure and the combination of message exchange sequences.

In a possible implementation form of the wireless power transfer network the at least one second wireless power transfer apparatus includes a processor that is configured to receive the first message in an application layer of an application of the at least one second wireless power transfer apparatus, form a second message in the application layer that is responsive to the first message and send the second message to the application identified by the third attribute of the first message. The second message includes a plurality of attributes, a first attribute of the second message defining a response to the first message, a second attribute identifying the application of the at least one second wireless power transfer apparatus generating the second message, and a third attribute identifying the application of the first wireless power transfer apparatus configured to receive the second message. The generic application layer frame structure enables the implementation of existing and new wireless power transfer services in a wireless power transfer network. New services can be derived from the generic frame structure and the combination of message exchange sequences.

In a possible implementation form of the wireless power transfer network one or more of the first message and the second message is formed to include one further attribute related to the wireless power transfer service. The aspects of the disclosed embodiments provide an application level message structure or format and standard message exchange sequence that is generic enough to implement different control, management, and value added services in a wireless power transfer network.

According to a fourth aspect according to the invention, the above and further objectives and advantages are obtained by a method for communicating, management, and control at an application layer level in a wireless power transfer network. In one embodiment, the method includes forming a first message in an application layer of an application of a first wireless power transfer apparatus. The first message includes a plurality of attributes. A first attribute of the first message identifies a wireless power transfer service of the wireless power transfer network. A second attribute identifies the application of first wireless power transfer apparatus generating the first message, and a third attribute identifies a destination application configured to receive the first message. The method includes sending the first message to the destination application identified by the third attribute of the first message. The aspects of the disclosed embodiments provide an application level message structure or format and standard message exchange sequence that is generic enough to implement different control, management, and value added services in a wireless power transfer network.

In a possible implementation form of the method, the method further includes forming a second message in an application layer of an application of a second wireless power transfer apparatus. The second message includes a plurality of attributes, a first attribute of the second message defining a response to the first message, a second attribute identifying the application of the second wireless power transfer apparatus generating the second message, and a third attribute identifying the application of the first wireless power transfer apparatus configured to receive the second message. The method further includes sending the second message to the application identified by the third attribute of the second message. The generic application layer frame structure enables the implementation of existing and new wireless power transfer services in a wireless power transfer network. New services can be derived from the generic frame structure and the combination of message exchange sequences.

In a possible implementation form of the method, the method further includes executing the wireless power transfer service associated with the first message and forming the first message or the second message with at least one further attribute indicating a result of the wireless power transfer service. The aspects of the disclosed embodiments provide an application level message structure or format and standard message exchange sequence that is generic enough to implement different control, management, and value added services in a wireless power transfer network.

In a possible implementation form of the method, the method includes forming one or more of the first message or the second message to include at least one further attribute. The further attribute can be specific to the particular wireless power transfer service being implemented. The aspects of the disclosed embodiments provide an application level message structure or format and standard message exchange sequence that is generic enough to implement different control, management, and value added services in a wireless power transfer network.

According to a fifth aspect according to the invention, the above and further objectives and advantages are obtained by a non-transitory computer readable medium having stored thereon program instructions. The program instructions, when executed by a processor, are configured to cause the processor to perform the method according to any one or more of the possible implementation forms of the method described herein. The aspects of the disclosed embodiments provide an application level message frame structure or communication protocol, and a standard message exchange sequence that is generic enough to implement different control, management, and value added services in a wireless power transfer network. New services can be derived from the generic frame structure and the combination of message exchange sequences.

These and other aspects, implementation forms, and advantages of the exemplary embodiments will become apparent from the embodiments described herein considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 illustrates a block diagram of an exemplary wireless power transfer network incorporating aspects of the disclosed embodiments.
Figure 2 illustrates an exemplary application layer message frame structure protocol incorporating aspects of the disclosed embodiments.
Figure 3 is a block diagram of an exemplary system that can be used to implement aspects of the disclosed embodiments.
Figure 4 illustrates an exemplary application layer message frame structure incorporating aspects of the disclosed embodiments.
Figure 5 illustrates an exemplary application layer messaging exchange sequence incorporating aspects of the disclosed embodiments.
Figures 6A and 6B illustrate exemplary application layer message frame structures incorporating aspects of the disclosed embodiments.
Figure 7 illustrates an exemplary application layer messaging sequence incorporating aspects of the disclosed embodiments.
Figures 8A-8D illustrates exemplary application layer message frame structures incorporating aspects of the disclosed embodiments.
Figure 9 illustrates an exemplary application layer messaging sequence incorporating aspects of the disclosed embodiments.
Figures 10A-10B illustrates exemplary application layer message frame structures incorporating aspects of the disclosed embodiments.
Figure 11 illustrates an exemplary application layer messaging sequence incorporating aspects of the disclosed embodiments.
Figures 12A-12B illustrates exemplary application layer message frame structures incorporating aspects of the disclosed embodiments.
Figure 13A and 13B illustrates exemplary application layer messaging sequences incorporating aspects of the disclosed embodiments.
Figures 14A-14E illustrates exemplary application layer message frame structures incorporating aspects of the disclosed embodiments.
Figures 15A and 15B illustrates exemplary application layer messaging sequences incorporating aspects of the disclosed embodiments.
Figures 16A-16B illustrates exemplary application layer message frame structures incorporating aspects of the disclosed embodiments.
Figure 17A-17C illustrate flowcharts of a method incorporating aspects of the disclosed embodiments.

### DETAILED DESCRIPTION OF THE DISCLOSED EMBODIMENTS

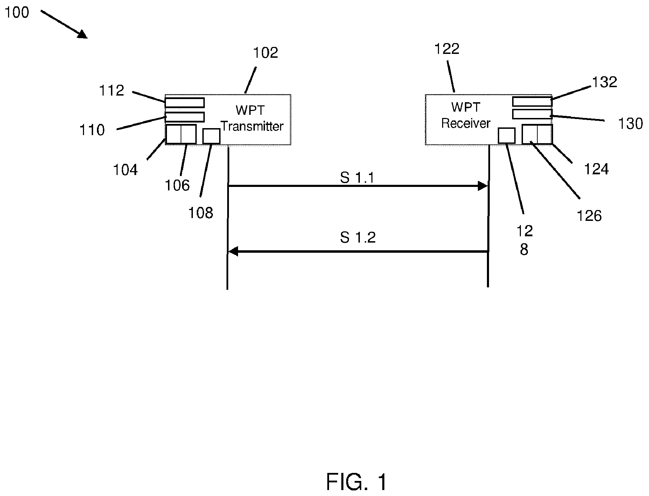

Referring to Figure 1, a schematic block diagram of an exemplary wireless power transfer network or system 100 incorporating aspects of the disclosed embodiments is illustrated. The wireless power transfer network 100, which can also be referred to as a wireless power transmission network or system, is configured to provide wireless power transfer services. The wireless power transfer services can include, but are not limited to, far-field wireless charging. The aspects of the disclosed embodiments are directed to a generic application-level communication frame structure or protocol for communicating, management and control in a wireless power transfer network (WPTN) 100. Specific frame structures are derived from the generic frame structure to implement a specific wireless power transfer (WPT) service. The application layer protocol of the disclosed embodiments is generic enough to facilitate implementation of new services in a wireless power transfer network 100.

As shown in Figure 1, the wireless power transfer network 100 comprises a first wireless power transfer apparatus 102 and at least one second wireless power transfer apparatus 122. In the example of Figure 1, the first wireless power transfer apparatus 102 is shown as a wireless power transfer transmitter device and the second wireless power transfer apparatus 122 is shown as a wireless power transfer receiver device. However, the aspects of the disclosed embodiments are not so limited. In alternate embodiments, the first wireless power transfer apparatus 102 and the second wireless power transfer apparatus 122 can comprise one or more of a transmitter, receiver transceiver other wireless power transfer device.

In one embodiment, the first wireless power transfer apparatus 102, which includes a processor 104, is configured to form a first message S1.1. in an application layer 112 of an application 110 of the apparatus 102. In one embodiment, the application 110 is related to or configured to provide a wireless power transfer service.

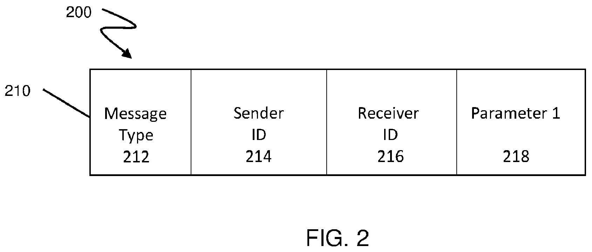

As shown in Figure 2, the first message S1.1 includes a plurality of attributes. As will be described further herein, a first attribute 212 of the first message S1.1, referred to herein as a message type, identifies a wireless power transfer service of the wireless power transfer network 100. A second attribute 214 identifies the application 110 of the apparatus 102 that is generating the first message S1.1. A third attribute 216 identifies a destination application to which the first message S1.1 is to be sent. As will be described further below, although the first message S1.1 is described here with respect to three attributes, the aspects of the disclosed embodiments are not so limited. In alternate embodiments, the message S1.1 can include any suitable number of attributes that are needed to implement the particular wireless power transfer service.

Once the first message S1.1 is formed, the first wireless power transfer apparatus 102 is configured to send the first message S1.1 to the destination application identified by the third attribute 216 of the first message S1.1. In one embodiment, the first wireless power transfer apparatus 102 can also include a memory 106 and a network interface card (NIC) 108. The memory 106 and the network interface card 108 can be coupled to the processor 104, which is configured to carry out the processes generally described herein. The memory 106, which is configured to be connected to the processor 104 using, for example, a system bus which also has a data and address bus to read and write data to the memory 106, is configured to store machine readable instructions as well as buffer incoming and outgoing messages. The network interface card 108 is configured to transmit and receive messages and is also configured to be connected to the processor 104 using a system bus (not shown).

Figure 2 illustrates an exemplary application layer message frame structure 200 for a message 210 incorporating aspects of the disclosed embodiments. In this example, the message frame structure 200 includes a plurality of attributes including a message type attribute 212, a sender identifier attribute 214 and a receiver identifier attribute 216. In one embodiment, the message type attribute 212 is specific to the wireless power transfer service being implemented through the message 210 and can also indicate the type of response required to the message.

The sender identifier attribute 214 identifies the application 110 of the first wireless power transfer apparatus 102 that is generating the message and requesting the specific wireless power transfer service. The receiver identifier attribute 216 is the identifier of the destination application that is configured to receive the request for the specific wireless power transfer service. In the example of Figure 1, the destination application is application 130 of the second wireless power apparatus 122. A device in a wireless power transfer network may run multiple applications, therefore it is important to identify the application that is sending the message, and at the same time it is important to identify at the receiver side the application that should receive the message.

In one embodiment, the application layer message frame structure 200 also includes at least one Parameter 1 attribute 218. The Parameter 1 attribute 218 can be any suitable attribute related to the particular wireless power transfer service being implemented. Although the exemplary application layer message frame structure 200 shown in Figure 2 includes only four attributes, the aspects of the disclosed embodiments are not so limited. In alternate embodiments, the application layer message frame structure 200 of the disclosed embodiments can include any suitable number and combinations of attributes needed to implement a particular wireless power transfer service as will be described further herein. The number of parameters in the application layer message frame structure 200 are variable, therefore more attributes can be added to the application layer message frame structure 200, such as for example, error, checksum and sequence attributes.

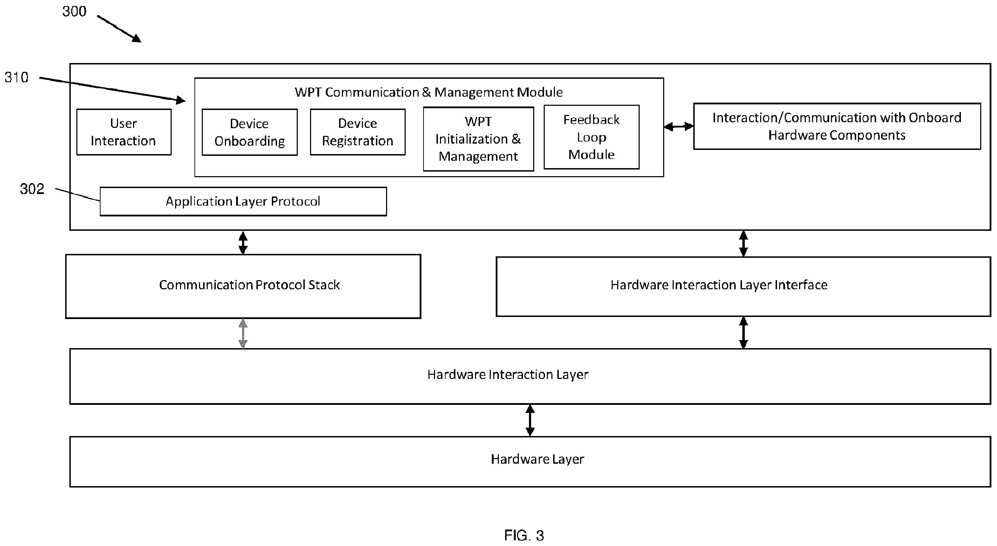

Figure 3 is a block diagram of a typical system 300 that supports communication among different devices in a network. The application layer message structure 200 of the disclosed embodiments targets the Application Layer Protocol 302. The example of Figure 3 also illustrates some exemplary services 310 that can be implemented on top of the application layer protocol 302 and the communication method presented here. The application layer message structure 200 of the disclosed embodiments is generic enough to facilitate implementation of new services in the wireless power transfer network 100.

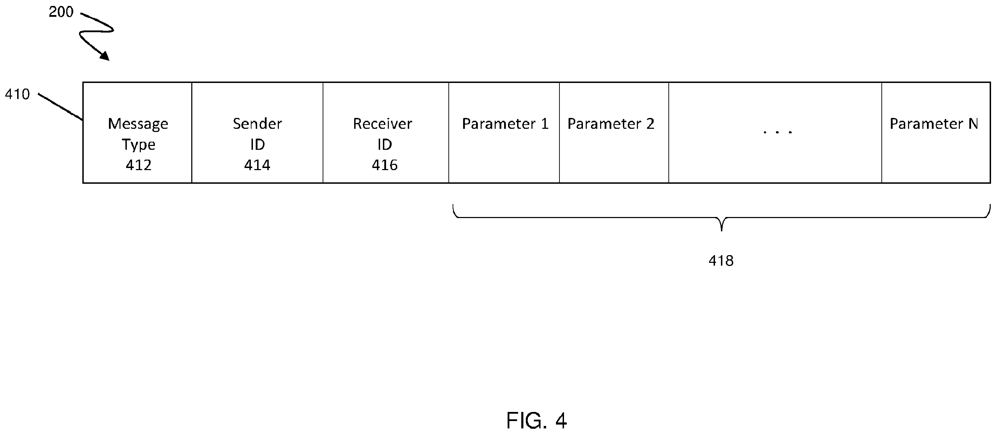

Figure 4 illustrates an exemplary message 410 incorporating the generic application layer message frame structure 200 of the disclosed embodiments. In this example, the message 410 includes a message type attribute 412, a sender identifier attribute 414, a receiver identifier attribute 416 and additional parameters 419, identified as parameter attributes 1 to N.

The communication among devices in a far-field wireless power transfer network, such as the network 100 of Figure 1, is unique as it takes place to facilitate wireless power transfer from a transmitter, such as the apparatus 102 to a receiver, such as the apparatus 122. To facilitate wireless power transfer a number of challenges related to management, control, and service delivery in a wireless power transfer network need to be addressed. The challenges include, but are not limited to facilitating the development of novel services in a wireless power transfer network; detecting whether a wireless power receiver is within the range of a wireless power transmitter; determining hardware/software capabilities of a wireless power transfer transmitter and receiver; dynamically configuring wireless power transmitters and receivers; associating a wireless power transfer receiver with a wireless power transfer transmitter at an application level; error reporting in a wireless power transmission network; and achieving interoperability among wireless power transfer transmitters and receivers, particularly when manufactured by different companies.

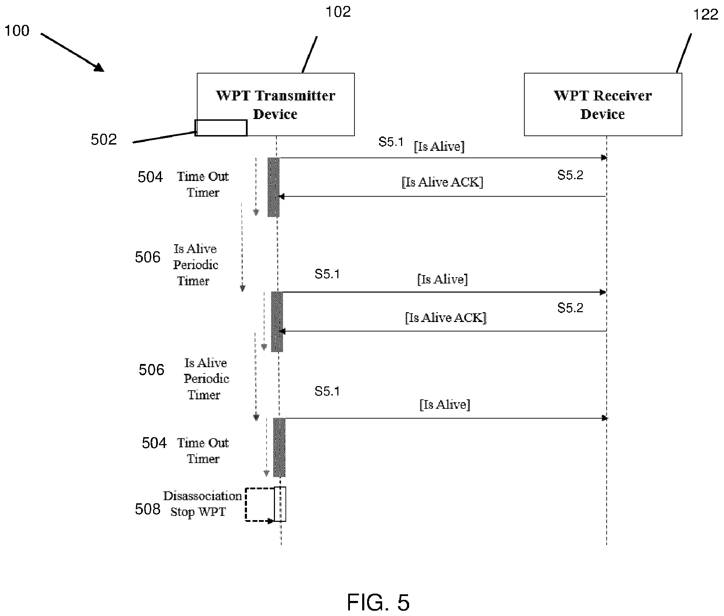

Referring to Figure 5, one example of a message exchange sequence using the application layer message data structure 200 of the disclosed embodiments is illustrated. In this example the wireless power transfer network 100 includes a first apparatus 102, or wireless power transmitter device and a second apparatus 122, or wireless power receiver device 122. In order to detect wireless power receiver mobility and/or wireless power transmitter mobility in wireless power transfer network 100, the wireless power transmitter device 102 periodically transmits a message S5.1, for example, "Is Alive" message to the wireless power receiver device 122. Although only one wireless power receiving device 122 is shown in Figure 5, the aspects of the disclosed embodiments are not so limited. In alternate embodiments, the wireless power transfer network 100 can include any suitable number of wireless power receiving devices 122 other than including one.

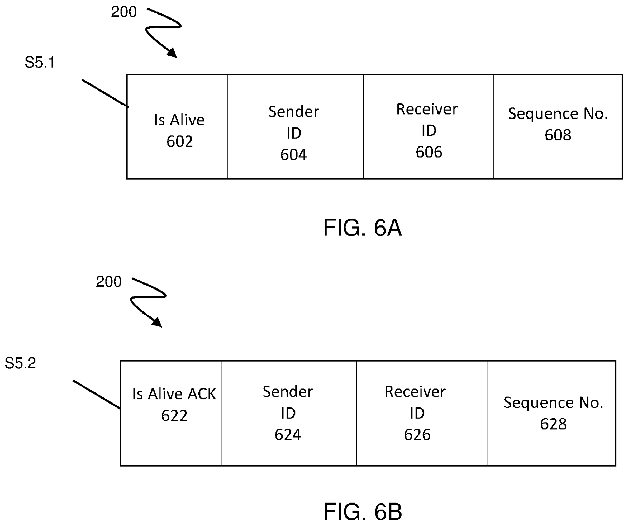

Upon receiving the message S5.1, the wireless power receiving device 122 can respond with another message S5.2, for example, "Is Alive Ack", to confirm that the wireless power receiving device 122 is present. For this service, two new messages S5.1 and S5.2 are required, and the messages S5.1 and S5.2 can be derived from the application layer message frame structure 200 shown in Figure 4. The format of the derived messages S5.1 and S5.2 are shown in Figures 6A and 6B.

Figures 6A and 6B illustrate the specific application message format for the "Is Alive" message S5.1 and the "Is Alive Ack" message S5.2, derived from the general message frame structure 200. As shown in Figure 6A, the application layer frame structure 200 for the message S5.1 includes the "Is Alive" message type attribute 602, the sender identifier attribute 604, the receiver or destination identifier 606 and a sequence number identifier 608. The message type attribute 602 includes the specific "Is Alive" service request. The sender identifier attribute 604 indicates the application that is sending the "Is Alive" message S5.1, and the receiver identifier 606 indicates the application that is to receive the "Is Alive" message S5.1. The sequence number attribute 608 can be indicative of the sequence of the particular message in the message exchange. Other attributes can be added to the message S5.1 and the order of attributes can also be varied.

In the example of Figure 6B, the application layer frame structure 200 for the message S5.1 includes the "Is Alive ACK" attribute 622, the sender identifier attribute 624, receiver identifier 626 and the sequence number 628. In this example, the "Is Alive ACK" attribute 622 includes a response that is specific to the "Is Alive" message type attribute included in the message S5.1. The sender identifier attribute 624 identifies the application sending the "Is Alive ACK" message S5.2, while the receiver identifier attribute 626 identifies the application that is to receive the "Is Alive ACK" message S5.2.

In the example of Figure 5, the transmitter 102 periodically transmits the "Is Alive" message S5.1 to the receiver 122, and upon reception of the message, the receiver 122 responds with "Is Alive Ack" message S5.1. In one embodiment, the system 100 can include a timer 502. The timer 502 can be configured to periodically monitor a time between transmission of the "Is Alive" message. At periodic time intervals determined by the timer 502, denoted as time intervals 506, the transmitter can be configured to transmit the "Is Alive" message.

In one embodiment, the timer 502, or other suitable timing device, can be used to monitor if a reply is received within a predetermined period of time. If the transmitter 102 does not receive a reply from the receiver 122 within the predetermined period of time, denoted as time interval 504, monitored or determined by timer 502, the transmitter 102 can be configured to resend the message S5.1. In one embodiment, the transmitter 102 can be configured to resend the message S5.1 'N' number of times, where N is a configurable parameter. After 'N' unsuccessfully attempts, the transmitter 102 is configured to disassociate 506 itself from the receiver 122 and terminate any wireless power transfer.

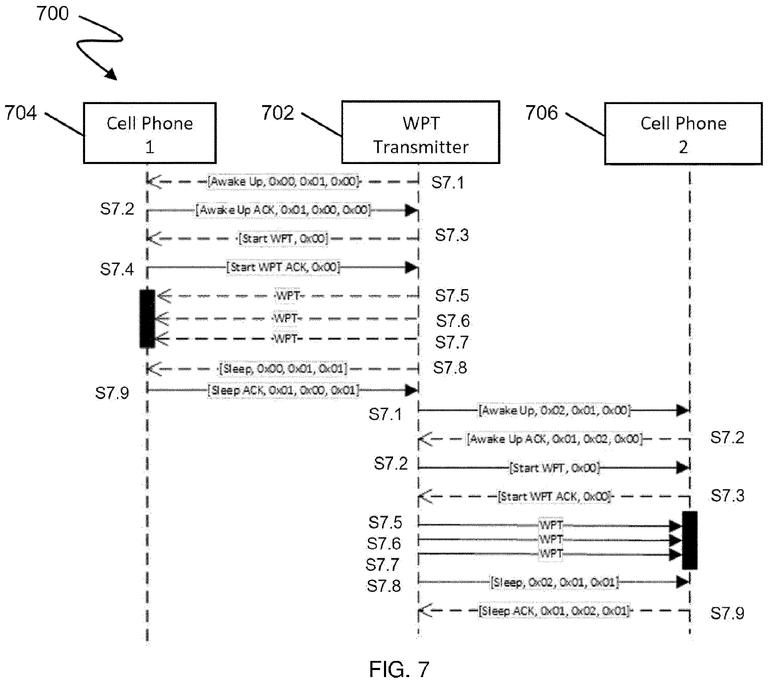

In a wireless power transfer network incorporating the application layer message structure 200 of the disclosed embodiments, the network can improve the wireless charging response times by providing wireless power to multiple receivers. Figure 7 illustrates the scheduling of wireless power in a wireless power transfer network using the application layer message frame structure 200 of the disclosed embodiments. In the wireless power transfer network 700 it is possible that the wireless power transmitter 702 may have to provide services to multiple receivers, such as for example receivers 704, 706. In this case, if the transmitter 702 fully charges wireless power transfer device 704 before providing service to another wireless power transfer device 706, the system response time will be negatively impacted. Instead, the transmitter 702 may generate a wireless power transmission schedule in an attempt to concurrently serve the devices 704, 706 based on the generated schedule. However, the transmitter(s) 702 implementing the wireless power transfer services need to inform the receivers 704, 706 about the wireless power scheduling instances. The application layer messaging structure 200 of the disclosed embodiments can be used to govern the interaction between the wireless power transfer transmitter 702 and the wireless power transfer receivers 704, 706The response time of the wireless power transfer network is improved because one receiving device 706 does not have to wait until the transmitter device 702 has fully charged the other 704 device to receive wireless power. Rather, timeslots for delivering power to different receivers can be established and the application layer message structure of the disclosed embodiments can be used to control the transmitter and receivers during scheduled timeslots.

The exemplary wireless power transfer network 700 illustrated in Figure 7 includes a wireless power transmitter 702 and two wireless receiver devices or apparatus 704, 706, identified as Cell Phone 1 and Cell Phone 2, respectively. In alternate embodiments, the network 700 can include any suitable number of wireless power transfer receivers, other than including two. The transmitter 702 may serve the different receivers 704, 706 at different time slots. Before initiating a power transfer service to a particular receiver 704, 706, the transmitter 702 sends an application layer protocol message S7.1, for example, "Awake Up" to the receiver 704. This message S7.1 informs the receiver 704 that the transmitter 702 now wants to transfer wireless power to the receiver 704, and the receiver 704 should get ready.

After processing the message S7.1, the receiver 704 sends its acknowledgment in an application layer protocol message S7.2, such as, "Awake up ACK". This message S7.2 informs the transmitter 702 that the receiver 704 has received the message S7.1 previously transmitted by the transmitter 702. The transmitter 702 sends message S7.3 indicating the start of the wireless power transfer, which is acknowledged by the receiver 704 in a message S7.4. Afterwards, for a defined time duration the transmitter 702 transmits wireless power to the receiver 704, as indicated by S7.5 to S7.8.

Once the receiver 704 has received the power for a pre-defined time duration, the transmitter 702 informs the receiver 704 that the time duration for the receiver 704 is over. The transmitter 702 achieves this functionality by sending another application layer protocol message S7.8, for example, "Sleep". The receiver 704 acknowledges the receipt of the message S7.8 transmitted by the transmitter 702 using another application layer protocol message S7.9, for example, "Sleep Ack". The transmitter 702 can repeat this same process with another receiver 706.

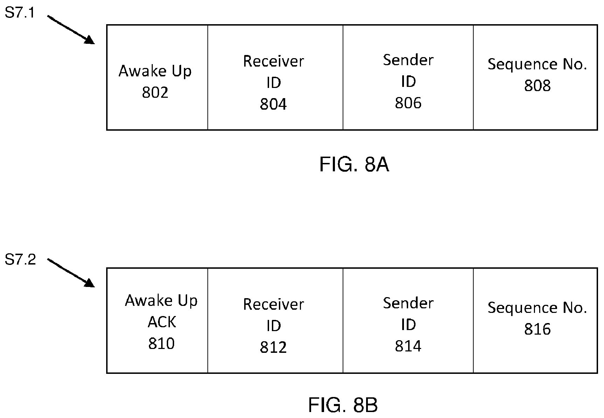

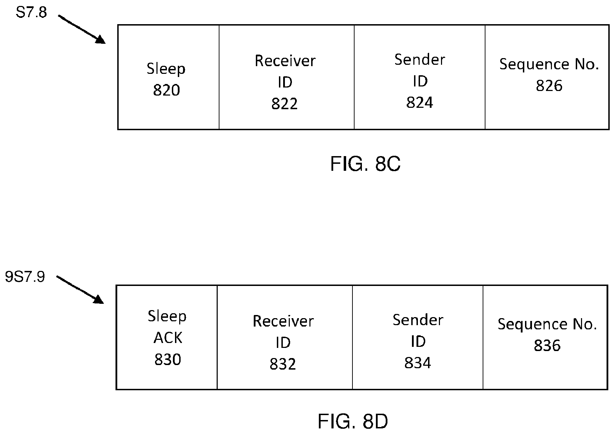

Figures 8A-8D illustrates application layer message frame structure 200 of the sequence of messages for wireless power scheduling in the wireless power transfer network 700. Figure 8A illustrates the application layer message frame structure for the "Awake Up" message S7.1. The attributes include the Awake Up message type 802, the receiver identifier 804, the sender identifier 806 and the sequence number identifier 808. Figure 8B illustrates the application layer message frame structure for the "Awake Up ACK" message S7.2. In this example the attributes include the Awake Up ACK message type 810, receiver identifier 812, sender identifier 814 and sequence number attribute 816.

In Figure 8D, the attributes of the application layer message frame structure or format for the Sleep message S7.8 include the Sleep message type 820, the receiver identifier 822, the sender identifier 824 and the sequence number 826. The attributes of the application layer message frame structure for the Sleep ACK message S7.9 include the Sleep ACK message type 830, the receiver identifier 832, the sender identifier 834 and the sequence number 836. The application layer message frame structure 200 not only incorporates the design of messages required to achieve this functionality, but it also presents an example sequence of the exchange of the messages. It should be noted here that the application layer message frame structure 200 is flexible in that it can be used to design more specific message structures for the functionality explained here, and similarly another sequence of message exchange can be derived.

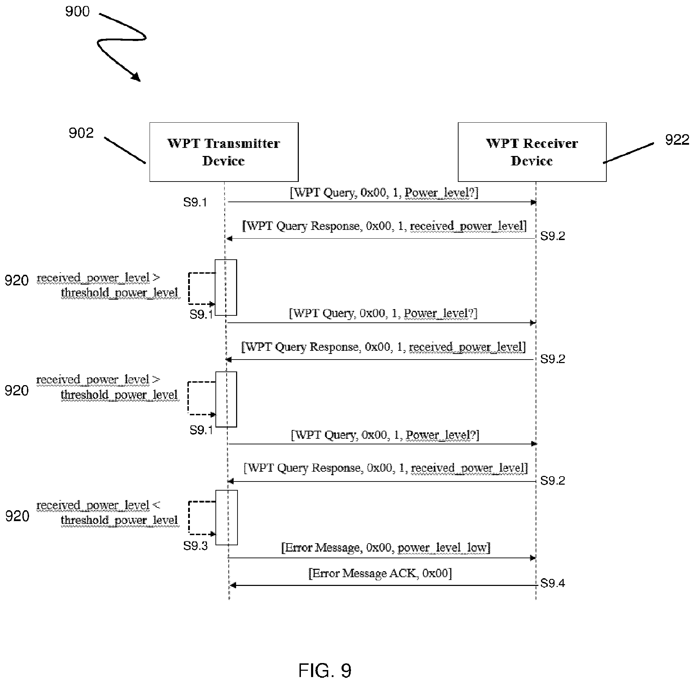

Figure 9 illustrates the use of the application layer message frame structure 200 of the disclose embodiments for querying devices in a wireless power transfer network. In the example of Figure 9, the wireless power transfer network 900 includes a wireless power transmitter device 902 and a wireless power receiver device 922. In this example, the transmitter device 902 or the receiver device 922 can be configured to inquire about different wireless power transfer features of the network 900. These features can include for example, but are not limited to, hardware/software configurations and harvested power per unit time. In order to achieve this functionality new messages are required.

In one embodiment, the transmitter 902 can use the "WPT Query" S9.1 message to inquire about received power level from a receiver 922. The response is transmitted by the receiver 922 using the "WPT Query Response" S9.2 and can include an indication of the received power level. The wireless power transmitter 902 can then determine 920 whether the received power level is greater than a threshold power level. The message exchange sequence shown in Figure 9 is one such possible message exchange sequence. By introducing another message the sequence can change.

For example, if the received power level is below a threshold power level, the message exchange sequence of Figure 9 can be configured to include an error message S9.3. The receiver device 922 acknowledges with an Error Message ACK S9.4. The wireless power transfer device 902 can also query about other attributes of the wireless power transfer network 900.

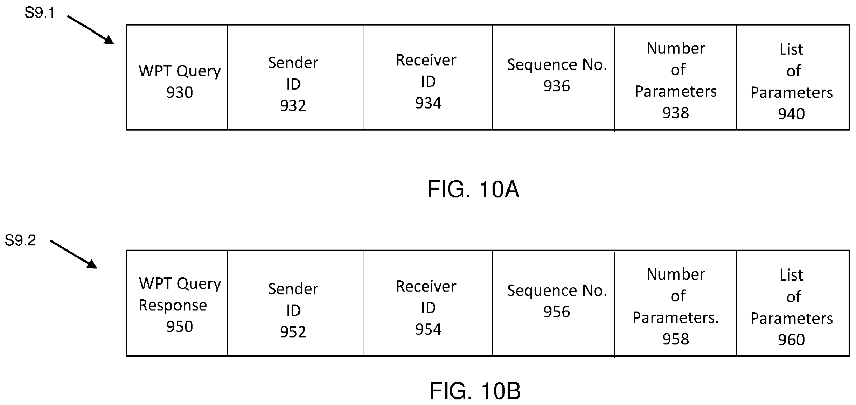

Figures 10A and 10B illustrate the specific application layer message frame structures of the "WPT Query" message S9.1 and the "WPT Query Response" message S9.2 derived from the general application layer message frame structure 200. The attributes of the WPT Query message S9.1 can include the WPT Query message type 930, the sender identifier 932, the receiver identifier 934, the sequence number 936, the number of parameters 938 and a list of parameters 940. The attributes of the WPT Query Response message S9.2 can include the WPT Query Response message type 950, the sender identifier attribute 952, the receiver identifier attribute 954, the sequence number 956, number of parameters 958 and list of parameters 960.

In a wireless power transfer network, it is possible that wireless power transmitter and wireless power receiver are coming from different manufacturers. Interoperability among such devices is a concern. In this case, the "WPT Query" message 930 and the "WPT Query Response" message 950 of the disclosed embodiments can be used to implement different wireless power transfer services between such devices and achieve interoperability between devices made by different manufacturers . For example, referring to Figure 9, the transmitter device 902 may be using X antenna elements to transfer wireless power in the form of electromagnetic waves. However the receiver device 922 may be using X + Y antenna elements. Using the application layer message structure of the disclosed embodiments, both the transmitter device 902 and the receiver device 922 can agree on a certain arrangement of antenna elements to better deliver wireless power. Other exemplary query message can include but are not limited to inquire about other hardware/software (including different algorithms for wireless channel sensing) elements/features. Afterwards, the transmitter device 902 and the receiver device 922 can agree on an arrangement that could better deliver the wireless power.

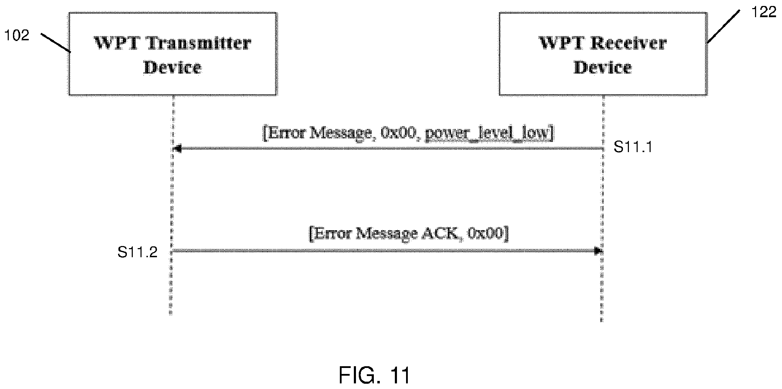

The application layer messaging structure 200 of the disclosed embodiments can be used to inform the transmitter 102 or receiver 122 in the wireless power transfer network if there is a malfunction. Referring to Figure 11, an example of error reporting using the application layer message frame structure of the disclosed embodiments is illustrated. If the receiver 122 develops a fault, it should report the fault to the transmitter 102. The transmitter 102 can then determine whether to stop transferring wireless power to the receiver 122 as the receiver 122 is not able to harvest the power. Similarly, if the transmitter 102 develops a fault, the transmitter 102 should inform the receiver 122 so that the receiver 122 can switch off its power harvesting hardware. The application layer message protocol 200 of the disclosed embodiments can incorporate this functionality.

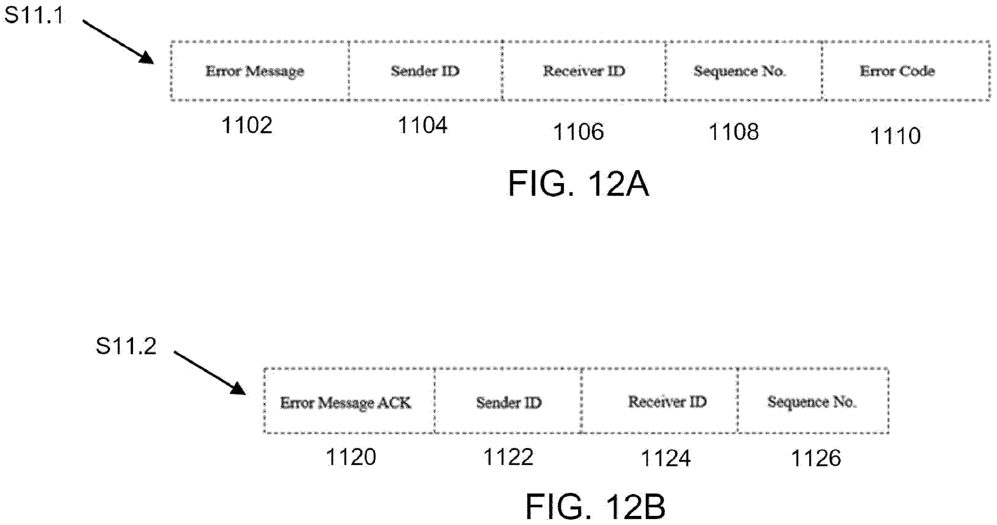

In the example of Figure 11, the receiver 122 is not properly harvesting the power and reports an error to the transmitter 102 using the Error Reporting Message S11.1. The transmitter device 102 receives the Error Message S11.1 and sends the Error Message ACK message S11.2. Figures 12A and 12B illustrate the application layer message data structure for the Error Message S11.1 and the Error Message ACK message S11.2.

As shown in Figure 12A, the attributes of the frame structure for the Error Reporting Message S11.1 include the Error Message type 1102, the sender identifier 1104, the receiver identifier 1106, the sequence number 1108 and the error code 1110. In Figure 12B, the attributes of the frame structure for the Error Message ACK S11.2 include the Error Message ACK type 1120, the sender identifier 1122, the receiver identifier 1124 and the sequence number 1126.

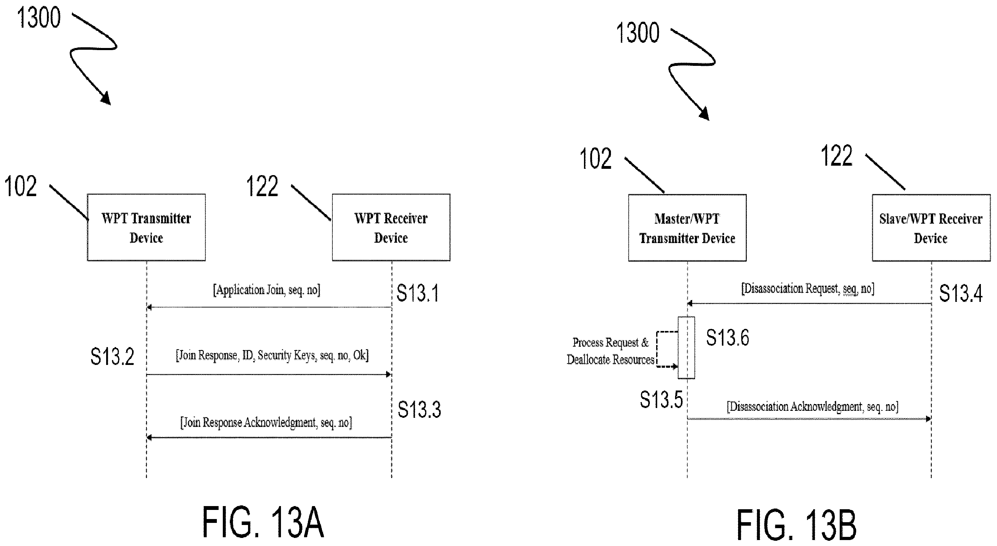

The application layer message data structure 200 of the disclosed embodiments can be used for associating/disassociating a device at the application layer. Usually, a device becomes part of a wireless power transfer network 100 using the underlying communication technology. However, to establish a wireless power transmission session a wireless power receiver device 122 needs to join a particular transmitter 102 at the application level as well. Similarly, when a device 122 no longer needs wireless power transfer services, the device may want to disassociate itself from the transmitter 102. Figure 13 illustrates an exemplary wireless power transfer network 1300 where the application layer message structure and sequence of message exchanges can accomplish the stated functionalities.

In the example of Figures 13A and 13B, the receiver device 122 wishing to join the network 1300 sends an application join message S13.1 to the transmitter device 102. The transmitter device 102 sends the Join Response message S13.2 back to the receive device 122 with joining instructions, such as a security key. The receiver device 122 sends the Join Response Acknowledgement S13.3 to the transmitter device 122.

When the receiver device 122 no longer needs wireless power transfer services, it can send a disassociation request message S13.4 to disassociate itself from the transmitter device 102. The transmitter device 102 is configured to process the request and deallocate resources S13.6. The transmitter device 102 sends a disassociation acknowledgement S13.5 when the resources are deallocated.

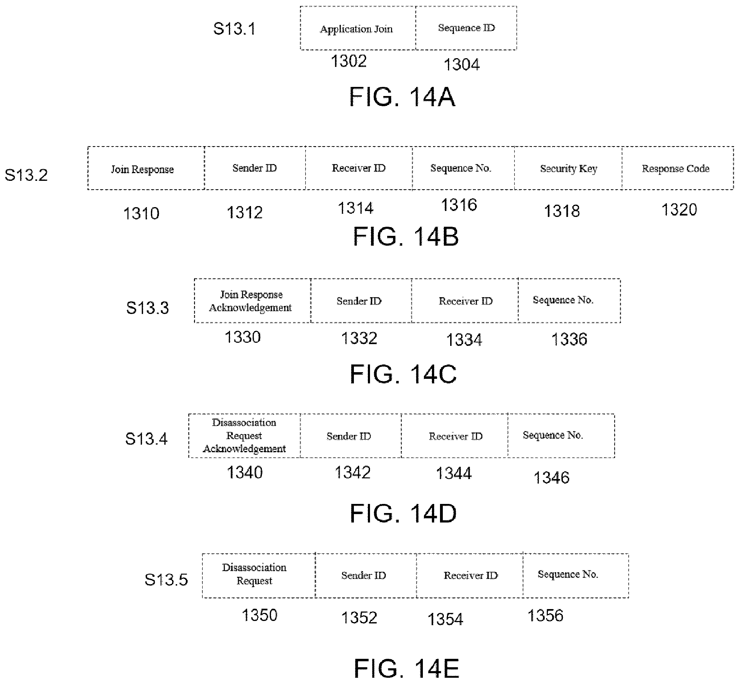

The application layer message structure for the Application Join S13.1, Join Response S13.2, Join Response Acknowledgment S13.3, Disassociation Request S13.4 and Disassociation Acknowledgment S13.5 are illustrated in Figures 14A through 14E. The structure for the Application Join message S13.1 includes the Application Join message type 1302 and a sequence identifier 1304. The structure for the Join Response message S13.2 includes the Join Response message type 1310, Sender ID 1312, Receiver ID 1314, Sequence Number 1316, Security Key 1318 and Response Code 1320. The structure for the Join Response Acknowledgement message S13.3 includes the Join Response Acknowledgement message type 1330, the Sender ID 1332, the Receiver ID 1334 and the Sequence Number 1336.

The structure for the Disassociation Request message S13.4 shown in Figure 14D includes the Disassociation Request message type 1340, the sender ID 1342, the receiver ID 1344 and the Sequence Number 1346. The structure for the Disassociation Request Acknowledgement message S13.5 shown in Figure 14E includes the Disassociation Request Acknowledgement message type 1350, the Sender ID 1352, the Receiver ID 1354 and the Sequence Number 1356.

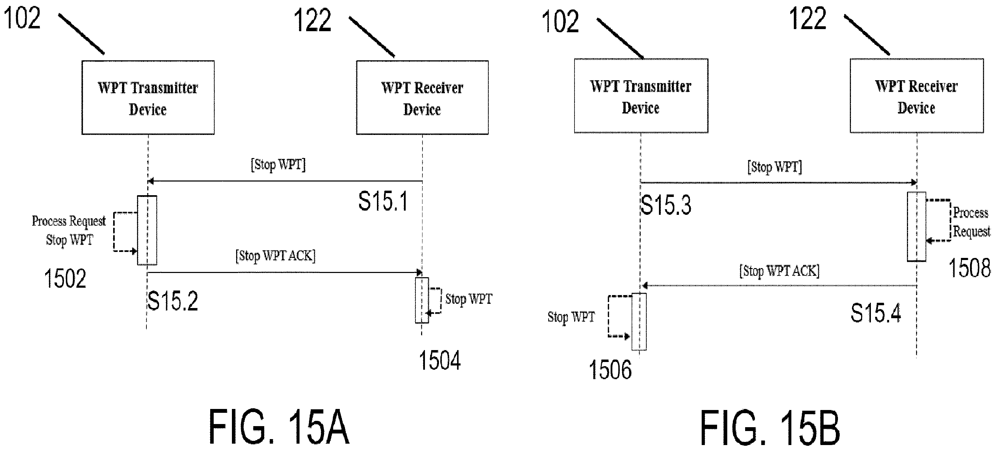

Referring to Figures 15A and 15B, in one embodiment, the application layer message structure 200 of the disclosed embodiments can be used to terminate a wireless power transfer session. Terminating a wireless power transfer session is essential as it frees the resources that are being used for power transmission and harvesting. The system can also switch to sleep mode to conserve power. The message exchange sequence shown in Figure 15 begins with the sending of the Stop wireless power transfer message S15.1 from the receiver device 122 to the transmitter device 102. The transmitter device 102 processes 1502 the request to stop wireless power transfer services. The transmitter device 102 sends a Stop Wireless Power Transfer Services acknowledgement message S15.2. The receiver device 122 is configured to stop 1504 wireless power transfer.

In the example of Figure 15B, the transmitter device 102 sends the Stop Wireless Power Transfer message S15.3 to the receiver device 122. The receiver device 122 processes 1508 the request and sends the Stop Wireless Power Transfer ACK message S15.4 to the transmitter device 102. The transmitter device 102 processes 1506 the acknowledgement message.

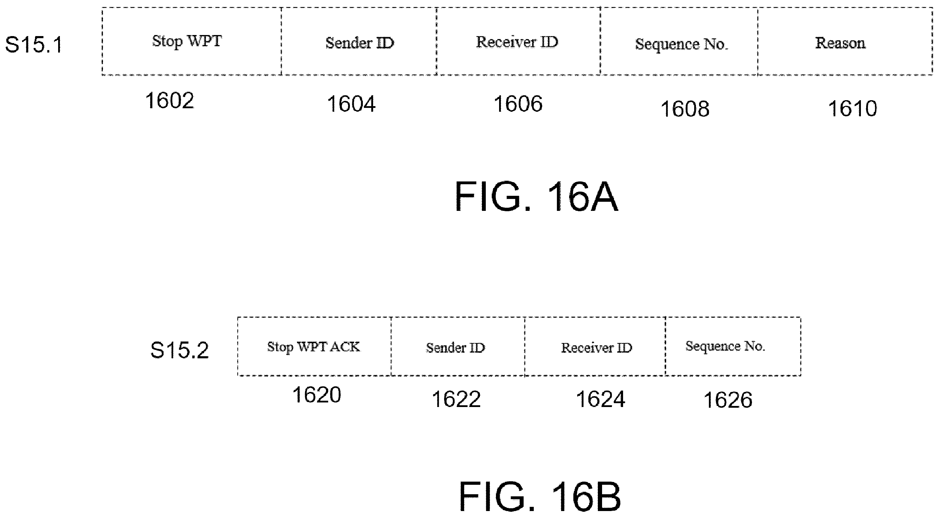

The structure of the Stop WPT message S15.1 to terminate a wireless power transfer session is shown in Figure 16A. In this example the attributes include the Stop WPT message type 1602, the Sender ID 1604, the Receiver ID 1606, the Sequence Number 1608 and the Reason attribute 1610. The structure of the Stop WPT ACK message S15.2 includes the Stop WPY ACK message type 1620, the Sender ID 1622, the Receiver ID 1624 and the Sequence Number 1626.

As the wireless field matures, frequent needs will arise to implement new management, control, or value added services in a wireless power transfer network. Hence, there is a need for a communication method among entities in a wireless power transfer network whose availability can readily provide functionality to easily add new services in such a network. The generic application layer data frame structure 200 of the disclosed embodiments provides arrangements and combination of attributes to implement existing and new services in the wireless power transfer network 100. To implement a new service in a wireless power transfer network 100, based on the service's requirements, specific frame structures can be derived from the generic frame structure 200 of Figure 2. The following are other exemplary services that can be implemented in a wireless power transfer network using the application layer message structure 200 of the disclosed embodiments.

Mobility Detection: If a wireless power transmitter, such as apparatus 102, is not aware of the movement of a receiver device, such as apparatus 122, during a power transfer session, the wireless power transmitter 102 will continue to transfer power. The application layer messaging structure 200 of the disclosed embodiments can be used to implement a lightweight service that enable the transmitter device 102 to determine whether the receiver 122 is still in range or not.

Remote WPT Hardware Control: A transmitter 102 may want to inquire about harvested power at the receiver side 122. The transmitter 102 can use this information to infer whether the used hardware/software settings are optimal or not. Based on the received information, the transmitter 102 may change hardware/software setting configuration at the receiver side over the wireless power transfer network 100.

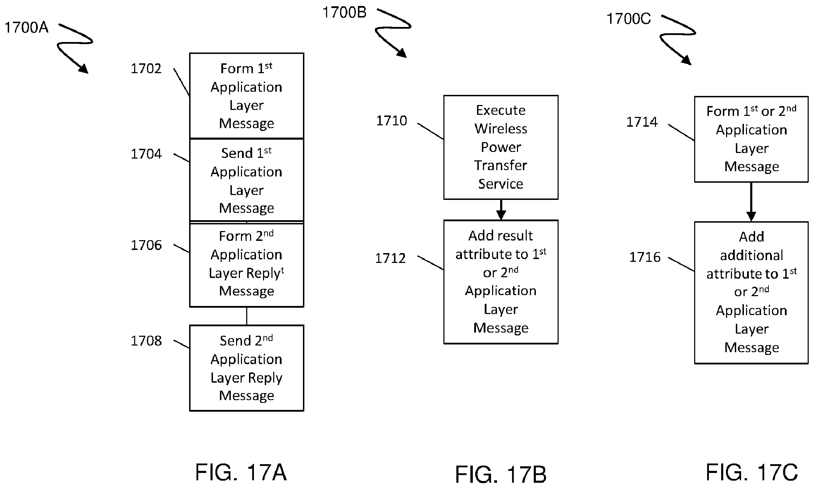

Figures 17A-17C are flowcharts illustrating aspects of the disclosed embodiments. In one embodiment, referring to Figure 17A, the method 1700A for communicating, management, and control at an application layer level in in a wireless power transfer network includes forming 1702 a first message in an application layer of an application of a first wireless power transfer device. The first message includes a plurality of attributes, a first attribute of the first message identifying a wireless power transfer service of the wireless power transfer network, a second attribute identifying the application of first wireless power transfer device, and a third attribute identifying a destination application configured to receive the first message. The first message is sent 1704 to the destination application identified by the third attribute of the first message.

As shown in Figure 17A, in one embodiment, the method 1700A further includes forming 1706 a second message in an application layer of an application of a second wireless power transfer device. The second message includes a plurality of attributes, a first attribute of the second message defining a response to the first message, a second attribute identifying the application of the second wireless power transfer device, and a third attribute identifying the application of the first wireless power transfer device configured to receive the second message. The second message is sent 1708 to the application identified by the third attribute of the second message.

Referring to Figure 17B, in one embodiment, the method 1700B further includes executing 1710 the wireless power transfer service associated with the first message and forming 1712 the first message or the second message with at least one further attribute indicating a result of the wireless power transfer service.

Referring to Figure 17C, in one embodiment, the method 1700C can also include forming 1714 one or more of the first message or the second message and including 1716 at least one further attribute. The at least one further attribute can be used to identify an aspect of the wireless power transfer service, or an attribute of a new wireless power transfer service.

The aspects of the disclosed embodiments provide for the implementation of novel management, control, and value added services in a wireless power transfer network. The application layer message data structure and message sequence exchange ensures that meaningful communication can occur between devices in the wireless power transfer network so that existing and novel new management, control, and value added services can be implemented on top of it. Specific frame structures are derived from the generic frame structure to implement a specific wireless power transfer service. The application layer protocol of the disclosed embodiments is generic enough to facilitate implementation of new services in a wireless power transfer network.

Thus, while there have been shown, described and pointed out, fundamental novel features of the invention as applied to the exemplary embodiments thereof, it will be understood that various omissions, substitutions and changes in the form and details of devices and methods illustrated, and in their operation, may be made by those skilled in the art without departing from the scope of the claims appended hereto.

## Claims

1. A transmitter wireless power transfer apparatus (102) in a wireless power transfer network (100), the apparatus (102) including a processor (104) configured to:
form a first message in an application layer (112) of an application (110) of the apparatus (102), the first message including a plurality of attributes,
wherein the number of attributes depends on a wireless power transfer service requested through the first message,
wherein a first attribute of the first message is a message type attribute specific to the requested wireless power transfer service of the wireless power transfer network (100) used for identifying the wireless power transfer service to be implemented through the first message and specifying the type of response required to the first message,
wherein a second attribute of the first message is a sender identifier attribute for identifying the application (110) of the apparatus (102) generating the first message,
wherein a third attribute of the first message is a receiver identifier attribute for identifying a destination application configured to receive the first message, and
wherein the first message further comprises as further attributes a number of parameters (938) and a list of parameters (940) related to the requested power transfer service; and
send the first message to the destination application identified by the third attribute of the first message.

2. The apparatus (102) according to claim 1, wherein the processor (104) is further configured to receive a second message in the application layer (112) of the apparatus (102), the second message including a plurality of attributes, a first attribute of the second message defining a response to the first message, a second attribute identifying an application generating the second message, and a third attribute identifying the application (110) of the apparatus (102) configured to receive the second message.

3. The apparatus (102) according to any one of the preceding claims wherein the apparatus (102) comprises a wireless power transfer device.

4. A receiver wireless power transfer apparatus (122) in a wireless power transfer network (100), the apparatus (122) including a processor (124) configured to:
receive a first message in an application layer (132) of an application (130) of the apparatus (122), the first message including a plurality of attributes,
wherein the number of attributes depends on a wireless power transfer service requested through the first message,
wherein a first attribute of the first message is a message type attribute specific to the requested wireless power transfer service of the wireless power transfer network (100) used for identifying the wireless power transfer service to be implemented through the first message and specifying the type of response required to the first message,
wherein a second attribute of the first message is a sender identifier attribute for identifying an application generating the first message,
a third attribute of the first message is a receiver identifier for identifying the application (130) of the apparatus (122) configured to receive the first message, and
wherein the first message further comprises as further attributes a number of parameters (938) and a list of parameters (940);
form a second message in the application layer (132) responsive to the first message, and
send the second message.

5. The apparatus (122) according to claim 4, wherein the apparatus (122) is configured to form the second message by including a plurality of attributes in the second message, a first attribute of the second message defining a response to the first message, a second attribute identifying the application (130) generating the second message, and a third attribute identifying an application of the wireless network (100) configured to receive the second message.

6. A wireless power transfer network (100) comprising a transmitter wireless power transfer apparatus (102) according to any one of claims 1 to 3 and at least one receiver wireless power transfer apparatus (122) according to any one of claims 4 to 5.

7. A method (1700) for communication, management, and control at an application layer level in a wireless power transfer network comprising:
forming (1702) a first message in an application layer of an application of a first wireless power transfer device, the first message including a plurality of attributes,
wherein the number of attributes depends on a wireless power transfer service requested through the first message,
wherein a first attribute of the first message is a message type attribute specific to the requested wireless power transfer service of the wireless power transfer network (100) used for identifying the wireless power transfer service to be implemented through the first message and specifying the type of response required to the first message,
wherein a second attribute of the first message is a sender identifier attribute for identifying the application of first wireless power transfer device generating the first message,
wherein a third attribute of the first message is a receiver identifier attribute for identifying a destination application configured to receive the first message, and
wherein the first message further comprises as further attributes a number of parameters (938) and a list of parameters (940) related to the requested power transfer service; and
sending (1704) the first message to the destination application identified by the third attribute of the first message.

8. The method (1700) according to claim 7, further comprising:
forming (1706) a second message in an application layer of an application of a second wireless power transfer device, the second message including a plurality of attributes, a first attribute of the second message defining a response to the first message, a second attribute identifying the application of the second wireless power transfer device generating the second message, and a third attribute identifying the application of the first wireless power transfer device configured to receive the second message; and
sending (1708) the second message to the application identified by the third attribute of the second message.

9. The method (1700) according to any one of claims 7 or 8 further comprising:
executing (1710) the wireless power transfer service associated with the first message; and
forming (1712) the first message or the second message with at least one further attribute indicating a result of the wireless power transfer service.

10. A non-transitory computer readable medium having stored thereon program instructions that, when executed by a processor, cause the processor to perform the method according to any one of claims 7 to 9.

## Patentansprüche

1. Sendereinrichtung (102) für drahtlose Leistungsübertragung in einem Netzwerk (100) für drahtlose Leistungsübertragung, wobei die Einrichtung (102) einen Prozessor (104) einschließt, konfiguriert zum:
Ausbilden einer ersten Nachricht in einer Anwendungsschicht (112) einer Anwendung (110) der Einrichtung (102), wobei die erste Nachricht eine Vielzahl von Attributen einschließt,
wobei die Anzahl von Attributen von einem drahtlosen Leistungsübertragungsdienst, der durch die erste Nachricht angefordert wird, abhängt,
wobei ein erstes Attribut der ersten Nachricht ein Nachrichtentypattribut ist, das für den angeforderten drahtlosen Leistungsübertragungsdienst des Netzwerks (100) für drahtlose Leistungsübertragung spezifisch ist, das zum Identifizieren des drahtlosen Leistungsübertragungsdienstes, der durch die erste Nachricht zu implementieren ist,
und zum Spezifizieren des Typs von Antwort, die auf die erste Nachricht erforderlich ist, verwendet wird,
wobei ein zweites Attribut der ersten Nachricht ein Senderidentifikatorattribut zum Identifizieren der Anwendung (110) der Einrichtung (102) ist, die die erste Nachricht erzeugt,
wobei ein drittes Attribut der ersten Nachricht ein Empfängeridentifikatorattribut zum Identifizieren einer Zielanwendung ist, die konfiguriert ist, um die erste Nachricht zu empfangen, und
wobei die erste Nachricht ferner als weitere Attribute eine Anzahl von Parametern (938) und eine Liste von Parametern (940) bezogen auf den angeforderten Leistungsübertragungsdienst umfasst; und
Senden der ersten Nachricht an die Zielanwendung, die durch das dritte Attribut der ersten Nachricht identifiziert wird.

2. Einrichtung (102) nach Anspruch 1, wobei der Prozessor (104) ferner konfiguriert ist, um eine zweite Nachricht in der Anwendungsschicht (112) der Einrichtung (102) zu empfangen, die zweite Nachricht eine Vielzahl von Attributen einschließt, ein erstes Attribut der zweiten Nachricht eine Antwort auf die erste Nachricht definiert, ein zweites Attribut eine Anwendung, die die zweite Nachricht erzeugt, identifiziert und ein drittes Attribut die Anwendung (110) der Einrichtung (102), die konfiguriert ist, um die zweite Nachricht zu empfangen, identifiziert.

3. Einrichtung (102) nach einem der vorstehenden Ansprüche, wobei die Einrichtung (102) eine drahtlose Übertragungsvorrichtung umfasst.

4. Empfängereinrichtung (122) für drahtlose Leistungsübertragung in einem Netzwerk (100) für drahtlose Leistungsübertragung, wobei die Einrichtung (122) einen Prozessor (124) einschließt, der konfiguriert ist zum:
Empfangen einer ersten Nachricht in einer Anwendungsschicht (132) einer Anwendung (130) der Einrichtung (122), wobei die erste Nachricht eine Vielzahl von Attributen einschließt,
wobei die Anzahl der Attribute von einem drahtlosen Leistungsübertragungsdienst, der durch die erste Nachricht angefordert wird, abhängt,
wobei ein erstes Attribut der ersten Nachricht ein Nachrichtentypattribut ist, das für den angeforderten drahtlosen Leistungsübertragungsdienst des Netzwerks (100) für drahtlose Leistungsübertragung spezifisch ist, das zum Identifizieren des drahtlosen Leistungsübertragungsdienstes, der durch die erste Nachricht zu implementieren ist,
und zum Spezifizieren des Typs von Antwort, die auf die erste Nachricht erforderlich ist, verwendet wird,
wobei ein zweites Attribut der ersten Nachricht ein Senderidentifikatorattribut zum Identifizieren einer Anwendung ist, die die erste Nachricht erzeugt,
ein drittes Attribut der ersten Nachricht ein Empfängeridentifikator zum Identifizieren der Anwendung (130) der Einrichtung (122) ist, die konfiguriert ist, um die erste Nachricht zu empfangen, und
wobei die erste Nachricht ferner als weitere Attribute eine Anzahl von Parametern (938) und eine Liste von Parametern (940) umfasst;
Ausbilden einer zweiten Nachricht in der Anwendungsschicht (132) reagierend auf die erste Nachricht, und
Senden der zweiten Nachricht.

5. Einrichtung (122) nach Anspruch 4, wobei die Einrichtung (122) konfiguriert ist, um die zweite Nachricht durch Einschließen einer Vielzahl von Attributen in die zweite Nachricht auszubilden, ein erstes Attribut der zweiten Nachricht eine Antwort auf die erste Nachricht definiert, ein zweites Attribut die Anwendung (130), die die zweite Nachricht erzeugt, identifiziert, und ein drittes Attribut eine Anwendung des drahtlosen Netzwerks (100), die konfiguriert ist, um die zweite Nachricht zu empfangen, identifiziert.

6. Netzwerk (100) für drahtlose Leistungsübertragung, das eine Sendereinrichtung (102) für drahtlose Leistungsübertragung nach einem der Ansprüche 1 bis 3 und mindestens eine Empfängereinrichtung (122) für drahtlose Leistungsübertragung nach einem der Ansprüche 4 bis 5 umfasst.

7. Verfahren (1700) für Kommunikation, Verwaltung und Steuerung auf einer Anwendungsschichtebene in einem Netzwerk für drahtlose Leistungsübertragung, das umfasst:
Ausbilden (1702) einer ersten Nachricht in einer Anwendungsschicht einer Anwendung einer ersten Einrichtung für drahtlose Leistungsübertragung, wobei die erste Nachricht eine Vielzahl von Attributen einschließt,
wobei die Anzahl der Attribute von einem drahtlosen Leistungsübertragungsdienst, der durch die erste Nachricht angefordert wird, abhängt,
wobei ein erstes Attribut der ersten Nachricht ein Nachrichtentypattribut ist, das für den angeforderten drahtlosen Leistungsübertragungsdienst des Netzwerks (100) für drahtlose Leistungsübertragung spezifisch ist, das zum Identifizieren des drahtlosen Leistungsübertragungsdienstes, der durch die erste Nachricht zu implementieren ist,
und zum Spezifizieren des Typs von Antwort, die auf die erste Nachricht erforderlich ist, verwendet wird,
wobei ein zweites Attribut der ersten Nachricht ein Senderidentifikatorattribut zum Identifizieren der Anwendung der ersten Einrichtung für drahtlose Leistungsübertragung ist, die die erste Nachricht erzeugt,
wobei ein drittes Attribut der ersten Nachricht ein Empfängeridentifikatorattribut zum Identifizieren einer Zielanwendung ist, die konfiguriert ist, um die erste Nachricht zu empfangen, und
wobei die erste Nachricht ferner als weitere Attribute eine Anzahl von Parametern (938) und eine Liste von Parametern (940) bezogen auf den angeforderten Leistungsübertragungsdienst umfasst; und
Senden (1704) der ersten Nachricht an die Zielanwendung, die durch das dritte Attribut der ersten Nachricht identifiziert wird.

8. Verfahren (1700) nach Anspruch 7, das ferner umfasst:
Ausbilden (1706) einer zweiten Nachricht in einer Anwendungsschicht einer Anwendung einer zweiten Einrichtung für drahtlose Leistungsübertragung, wobei die zweite Nachricht eine Vielzahl von Attributen einschließt, ein erstes Attribut der zweiten Nachricht eine Antwort auf die erste Nachricht definiert, ein zweites Attribut die Anwendung der zweiten Einrichtung für drahtlose Leistungsübertragung, die die zweite Nachricht erzeugt, identifiziert und ein drittes Attribut die Anwendung der ersten Einrichtung für drahtlose Leistungsübertragung, die konfiguriert ist, um die zweite Nachricht zu empfangen, identifiziert; und
Senden (1708) der zweiten Nachricht an die Anwendung, die durch das dritte Attribut der zweiten Nachricht identifiziert wird.

9. Verfahren (1700) nach einem der Ansprüche 7 oder 8, das ferner umfasst:
Ausführen (1710) des drahtlosen Leistungsübertragungsdienstes, der der ersten Nachricht zugeordnet ist; und
Ausbilden (1712) der ersten Nachricht oder der zweiten Nachricht mit mindestens einem weiteren Attribut, das ein Ergebnis des drahtlosen Leistungsübertragungsdienstes angibt.

10. Nicht flüchtiges computerlesbares Medium, das Programmanweisungen darauf gespeichert aufweist, die, wenn sie durch einen Prozessor ausgeführt werden, den Prozessor veranlassen, das Verfahren nach einem der Ansprüche 7 bis 9 durchzuführen.

## Revendications

1. Appareil (102) de transfert d'énergie sans fil transmetteur dans un réseau de transfert d'énergie sans fil (100), l'appareil (102) comportant un processeur (104) configuré pour :
former un premier message dans une couche d'application (112) d'une application (110) de l'appareil (102), le premier message comportant une pluralité d'attributs,
dans lequel le nombre d'attributs dépend d'un service de transfert d'énergie sans fil demandé par le biais du premier message,
dans lequel un premier attribut du premier message est un attribut de type de message spécifique au service de transfert d'énergie sans fil demandé du réseau de transfert d'énergie sans fil (100) utilisé pour identifier le service de transfert d'énergie sans fil à mettre en œuvre par le biais du premier message et spécifier le type de réponse requis au premier message,
dans lequel un deuxième attribut du premier message est un attribut d'identifiant d'expéditeur permettant d'identifier l'application (110) de l'appareil (102) générant le premier message,
dans lequel un troisième attribut du premier message est un attribut d'identifiant de récepteur permettant d'identifier une application de destination configurée pour recevoir le premier message, et
dans lequel le premier message comprend en outre, comme attributs supplémentaires, un certain nombre de paramètres (938) et une liste de paramètres (940) se rapportant au service de transfert d'énergie demandé ; et
envoyer le premier message à l'application de destination identifiée par le troisième attribut du premier message.

2. Appareil (102) selon la revendication 1, dans lequel le processeur (104) est en outre configuré pour recevoir un second message dans la couche d'application (112) de l'appareil (102), le second message comportant une pluralité d'attributs, un premier attribut du second message définissant une réponse au premier message, un deuxième attribut identifiant une application générant le second message, et un troisième attribut identifiant l'application (110) de l'appareil (102) configuré pour recevoir le second message.

3. Appareil (102) selon l'une quelconque des revendications précédentes, dans lequel l'appareil (102) comprend un dispositif de transfert d'énergie sans fil.

4. Appareil (122) de transfert d'énergie sans fil récepteur dans un réseau de transfert d'énergie sans fil (100), l'appareil (122) comportant un processeur (124) configuré pour :
recevoir un premier message dans une couche d'application (132) d'une application (130) de l'appareil (122), le premier message comportant une pluralité d'attributs,
dans lequel le nombre d'attributs dépend d'un service de transfert d'énergie sans fil demandé par le biais du premier message,
dans lequel un premier attribut du premier message est un attribut de type de message spécifique au service de transfert d'énergie sans fil demandé du réseau de transfert d'énergie sans fil (100) utilisé pour identifier le service de transfert d'énergie sans fil à mettre en œuvre par le biais du premier message et spécifier le type de réponse requis au premier message,
dans lequel un deuxième attribut du premier message est un attribut d'identifiant d'expéditeur permettant d'identifier une application générant le premier message,
un troisième attribut du premier message est un identifiant de récepteur permettant d'identifier l'application (130) de l'appareil (122) configurée pour recevoir le premier message, et
dans lequel le premier message comprend en outre, comme attributs supplémentaires, un certain nombre de paramètres (938) et une liste de paramètres (940) ;
former un second message dans la couche d'application (132) en réponse au premier message, et
envoyer le second message.

5. Appareil (122) selon la revendication 4, dans lequel l'appareil (122) est configuré pour former le second message en incluant une pluralité d'attributs dans le second message, un premier attribut du second message définissant une réponse au premier message, un deuxième attribut identifiant l'application (130) générant le second message et un troisième attribut identifiant une application du réseau sans fil (100) configurée pour recevoir le second message.

6. Réseau de transfert d'énergie sans fil (100) comprenant un appareil (102) de transfert d'énergie sans fil transmetteur selon l'une quelconque des revendications 1 à 3 et au moins un appareil (122) de transfert d'énergie sans fil récepteur selon l'une quelconque des revendications 4 à 5.

7. Procédé (1700) pour la communication, la gestion et la commande à un niveau de couche d'application dans un réseau de transfert d'énergie sans fil comprenant :
la formation (1702) d'un premier message dans une couche d'application d'une application d'un premier dispositif de transfert d'énergie sans fil, le premier message comportant une pluralité d'attributs,
dans lequel le nombre d'attributs dépend d'un service de transfert d'énergie sans fil demandé par le biais du premier message,
dans lequel un premier attribut du premier message est un attribut de type de message spécifique au service de transfert d'énergie sans fil demandé du réseau de transfert d'énergie sans fil (100) utilisé pour identifier le service de transfert d'énergie sans fil à mettre en œuvre par le biais du premier message et spécifier le type de réponse requis au premier message,
dans lequel un deuxième attribut du premier message est un attribut d'identifiant d'expéditeur permettant d'identifier l'application d'un premier dispositif de transfert d'énergie sans fil générant le premier message,
dans lequel un troisième attribut du premier message est un attribut d'identifiant de récepteur permettant d'identifier une application de destination configurée pour recevoir le premier message, et
dans lequel le premier message comprend en outre, comme attributs supplémentaires, un certain nombre de paramètres (938) et une liste de paramètres (940) se rapportant au service de transfert d'énergie demandé ; et
l'envoi (1704) du premier message à l'application de destination identifiée par le troisième attribut du premier message.

8. Procédé (1700) selon la revendication 7, comprenant en outre :
la formation (1706) d'un second message dans une couche d'application d'une application d'un second dispositif de transfert d'énergie sans fil, le second message comportant une pluralité d'attributs, un premier attribut du second message définissant une réponse au premier message, un deuxième attribut identifiant l'application du second dispositif de transfert d'énergie sans fil générant le second message, et un troisième attribut identifiant l'application du premier dispositif de transfert d'énergie sans fil configurée pour recevoir le second message ; et
l'envoi (1708) du second message à l'application identifiée par le troisième attribut du second message.

9. Procédé (1700) selon l'une quelconque des revendications 7 ou 8, comprenant en outre :
l'exécution (1710) du service de transfert d'énergie sans fil associé au premier message ; et
la formation (1712) du premier message ou du second message avec au moins un attribut supplémentaire indiquant un résultat du service de transfert d'énergie sans fil.

10. Support non transitoire lisible par ordinateur sur lequel sont stockées des instructions de programme qui, lorsqu'elles sont exécutées par un processeur, amènent le processeur à réaliser le procédé selon l'une quelconque des revendications 7 à 9.
